# EUROPEAN PATENT SPECIFICATION

(11) **EP 2 149 618 B1**
(45) Date of publication and mention of the grant of the patent: **26.10.2011**
(21) Application number: 08425525.6
(22) Date of filing: 30.07.2008
(51) Int. Cl.: C22F 1/05, C22C 21/00, B21K 1/16, F16L 19/06

(54) **Hot pressing process, particularly for providing metal unions for pneumatic, hydraulic and fluid-operated circuits, and metal union obtained thereby**
Heisspressverfahren, insbesondere zur Herstellung von metallischen Kupplungsstücken für pneumatische, hydraulische und fluid-betriebene Kreisläufe, sowie durch dieses Verfahren hergestellte metallische Kupplungsstücke
Procédé d'emboutissage à chaud, en particulier pour la fabrication de raccords métalliques pour des circuits hydrauliques, pneumatiques ou contenant des fluides, et raccord obtenu par ce procédé.

(43) Date of publication of application: 03.02.2010
(73) Proprietor: Olab S.r.l., 25030 Torbole Casaglia (Brescia) (IT)
(72) Inventor: Bottura, Cesare, 25121 Brescia (IT)
(74) Representative: Alagem Modiano, Lara S.

(56) References cited:
- WO-A-02/38821
- JP-A- 8 218 143
- US-A1- 2008 078 480
- DE. JOHN DATTA: "Aluminium-Schlüssel, Key to aluminium alloys" 1997, ALUMINIUM ZENTRALE DÜSSELDORF , DÜSSELDORF , XP002508383 ISBN: 3-87017-254-1 * page 236 - page 238 *

## Description

The present invention relates to a hot pressing process, particularly for providing metal unions for pneumatic, hydraulic and fluid-operated circuits.

In the field of systems and in particular in the fields of shipbuilding and rail vehicle building, the need to provide interfacing and/or connecting components with high performance among the different components of the system is now routine.

More precisely, metal unions, typically made of brass and/or stainless steel alloys, are known which can be used at high operating pressures, up to ten times higher than the normal pressures used in the most widely spread systems.

The choice of the material is linked substantially to the technological process used to provide the union.

In fact, in order to obtain components that have a high mechanical performance and an excellent dynamic behavior, the material of the generic component that is manufactured must have a structure that is as much as possible homogeneous, uniform and free from cracks.

The technological process that allows to obtain such characteristics is hot pressing, which however can be applied only to a limited range of materials, which include steel, brass, copper, et cetera.

In the background art, if lighter components, for example made of aluminum, are manufactured, in view of the characteristics of aluminum such components can be provided only by means of a pressure die-casting process, which does not ensure lack of cracks and homogeneity of the material.

WO 02/38821 A discloses a method for processing extrusion ignots of an aluminium alloy, comprising a homogenisation ignot heating at 520-600° C for 1 to 12 hours, followed by a soft annealing cooling, initially at a rate of 5-50°C per hour then to 300-450°C which is maintained for 2-24 hours, and then final cooling to room temperature. These ignots so treated to homogenisation and soft annealing are then subjected to a quick preheating step to 350-470°C and loaded into an extrusion press where profiles or blanks are extruded at 500-590°C, then quickly cooled and stretched, and possibly a preforming step takes place while deformation resistance is low. These blanks of extruded section are then solutionised by heating to 500-580°C held for 10-60 minutes, then quickly (1-60 seconds) quenched to room temperature, at which final forming and processing operations (bending, forging, or hydroforming) may be carried out, after which the formed profile or blank is finally treated to an ageing operation.

US 2008/0078480 A1 discloses a method for forming aluminium alloy semi-finished workpieces, comprising homogenizing an aluminium alloy ignot at a temperature between 420-540°C, then pressing or rolling at 450-560°C to form a semi-finished product, which is then heated to a solution treatment temperature of 440-560°C and hot-formed at this temperature. This forged semi-finished product is then quenched for example with air or water and artificially aged at a temperature between 160-240°C.

JP 08 218143 A discloses a method for producing an aluminium alloy extruded material for a heat exchanger connector, comprising homogenizing an aluminium alloy ignot at 420-580°C for 2-24 hours, and then subjecting the heated ignot to hot extrusion at 420-550°C, followed by a press quenching and subsequent artificial aging treatment by heating at 100-200°C for 2-24 hours.

The aim of the present invention is to eliminate the drawback cited above, by providing a hot pressing process, particularly for providing metal unions for pneumatic, hydraulic and fluid-operated circuits, that allows to use aluminum to obtain components that can be used in pneumatic and/or hydraulic systems with high operating pressures.

Within this aim, an object of the present invention is to provide a hot pressing process that allows to obtain components with material that is structurally homogeneous and free from cracks.

Another object of the present invention is to provide a hot pressing process to obtain aluminum components whose mechanical performance and dynamic behavior are comparable to those of components made of more traditional materials, such as for example brass and steel alloys.

Another object of the present invention is to provide a particular aluminum alloy that allows hot pressing.

In accordance with the invention,there is provided a hot pressing process for providing metal unions for pneumatic, hydraulic and fluid-operated circuits, as defined in the appended claims.

Further characteristics and advantages of the present invention will become better apparent from the description of a preferred but not exclusive embodiment of a hot pressing process, particularly for providing metal unions for pneumatic, hydraulic and fluid-operated circuits, according to the invention, illustrated by way of nonlimiting example in the accompanying drawings, wherein:

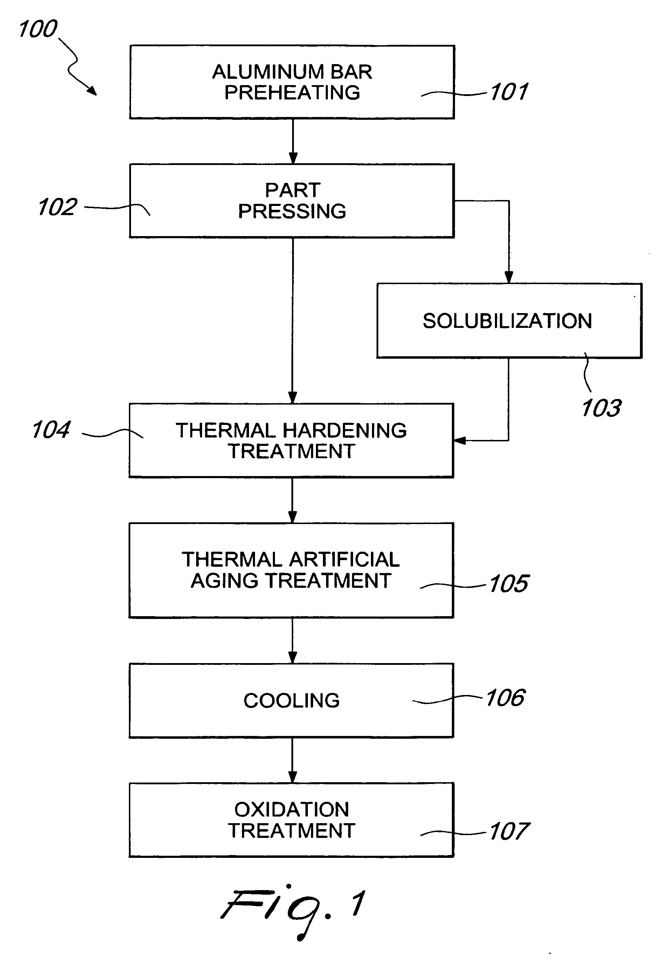

Figure 1 is a block diagram of the steps of an embodiment of a hot pressing process for aluminum components according to the present invention;

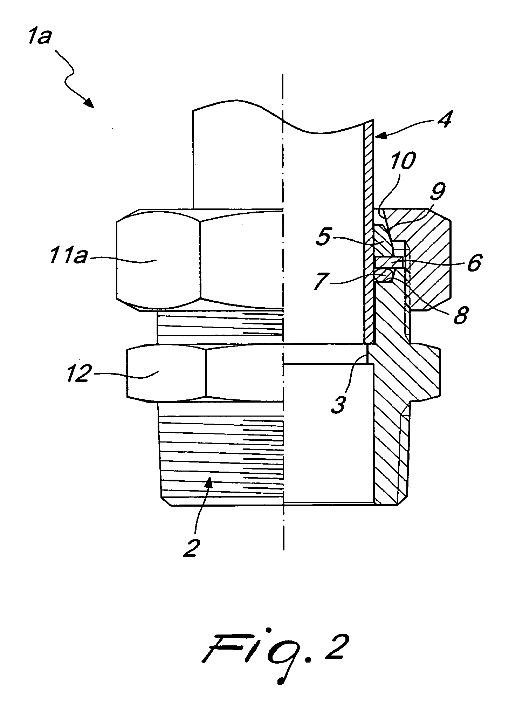

Figure 2 is a partially sectional side elevation view of a first variation of a metal union that can be obtained with the hot pressing process shown in Figure 1;

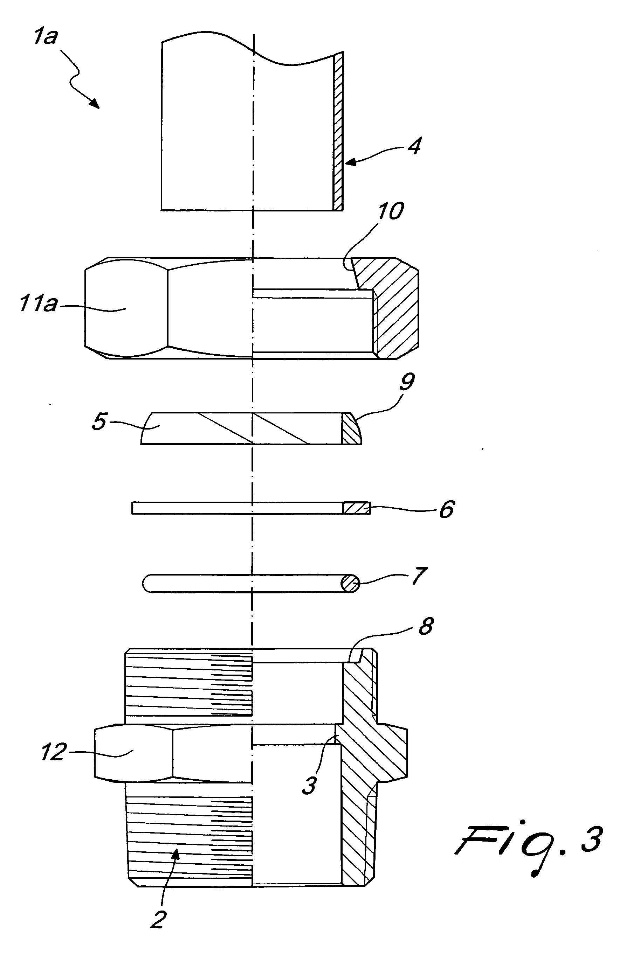

Figure 3 is a partially sectional exploded view of the metal union shown in Figure 2;

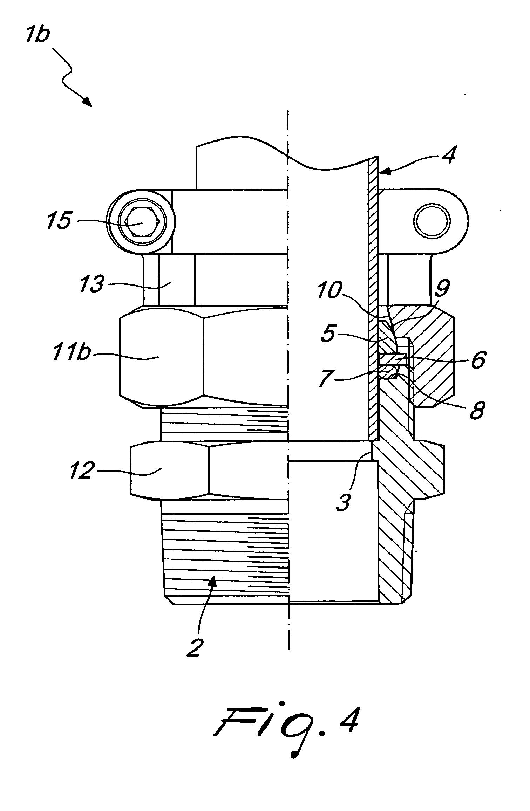

Figure 4 is a partially sectional side elevation view of a second embodiment of a metal union that can be obtained with the hot pressing process shown in Figure 1;

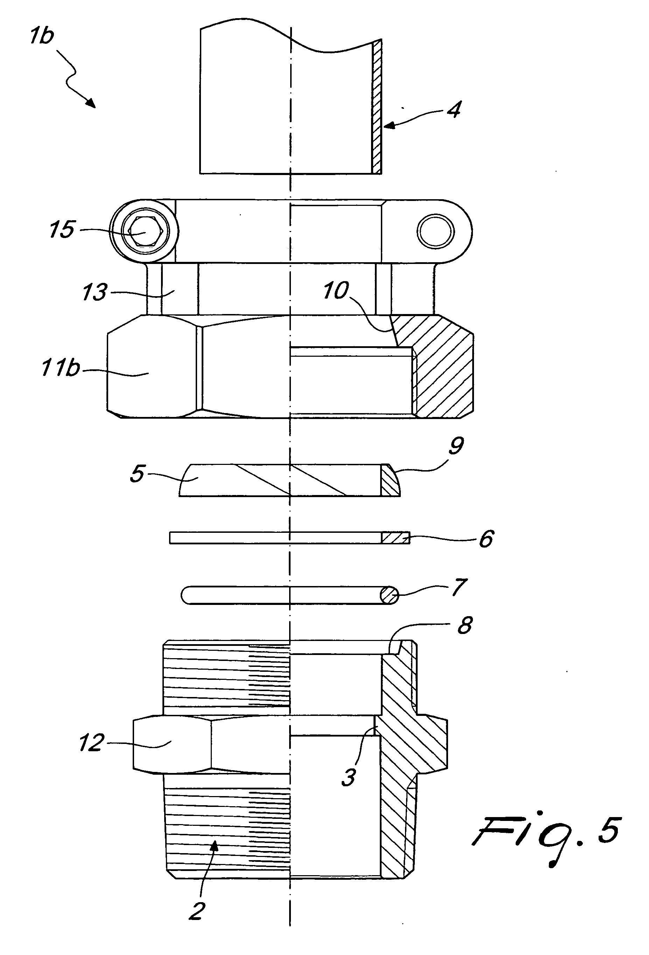

Figure 5 is a partially sectional exploded view of the metal union shown in Figure 4;

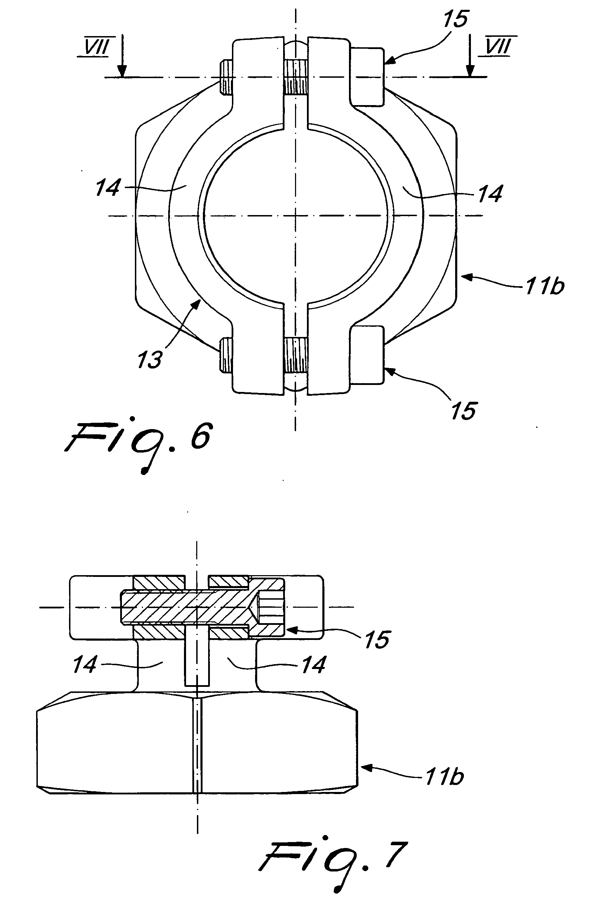

Figure 6 is a view of the locking nut of the union shown in Figure 4;
Figure 7 is a sectional view of the locking nut shown in Figure 6, taken along the line VII-VII.

With reference to the figures, the hot pressing process, particularly for providing metal unions for pneumatic, hydraulic and fluid-operated circuits, generally designated by the reference numeral 100, comprises a step 101 of preheating aluminum alloy bars in a first furnace at a temperature ranging substantially from 430°C to 470°C, so that such temperature is uniform over the entire section of the bars.

A step 102 of pressing the part starting from the previously heated bars is then provided.

More specifically, the generic part can consist of a metal union for pneumatic, hydraulic and fluid-operated circuits provided in a plurality of variations, which will be described hereinafter.

After pressing the part, one proceeds with a step 103 known as solubilization. In this step 103, a second preheating of the metal unions in a second furnace to a solubilization temperature ranging substantially from 515°C to 525°C is provided for a minimum time substantially equal to 2 hours, and then a thermal hardening treatment 104 is performed which comprises an immersion of the metal unions in a bath of water preferably at ambient temperature.

With the cited solubilization temperatures, the immersion of the metal unions in the bath must be performed within 30 seconds of the solubilization step 103, with the bath at a maximum temperature that is substantially lower than 40°C.

As an alternative, immersion of the metal unions in the bath can be performed directly after the pressing step 102. In this case, the step 101 of preheating the bars occurs at a temperature ranging substantially from 480°C to 500°C for a minimum time that is substantially equal to 2 hours.

It must be specified that according to the invention, the standard cycle is the one that provides for the solubilization step 103. The elimination of this step can be seen as a modification to the standard cycle and is feasible only by maintaining a higher temperature in the preheating step 101.

In any case, after the thermal hardening treatment 104, after a waiting interval ranging from 2 to 3 hours, a thermal treatment for artificial aging 105 is provided which comprises keeping the metal unions in a third furnace at a uniform temperature ranging from 135°C to 145°C for substantially 8 hours.

Finally, a cooling step 106 is provided after the thermal treatment 105 and can be performed according to traditional criteria.

To ensure maximum resistance to corrosion caused by exposure to atmospheric agents, a treatment 107 of anode oxidation is provided on the metal unions and generates the oxidation of a thin surface layer of the metal unions, thus ensuring corrosion protection of the underlying material and determining, as a direct consequence, a considerable increase in the life of the metal union.

More precisely, the anode oxidation treatment 107 provides for a first step of protective anode oxidation, which oxidizes for a thickness of approximately 15 microns the surface of the part according to the UNI4522 standard, and a second step of oxide coloring in order to give the metal union the desired color.

The described hot pressing process 100 can be applied to several aluminum alloys and in particular is optimized for the use of a particular aluminum alloy known as AL2, since it is the one that ensures the best physical/mechanical quality of the pressed parts.

More precisely, the chemical composition of the aluminum alloy AL2 is as follows:
- silicon, with a percentage by weight ranging substantially from 0.6% to 1.4%,
- iron, with a percentage by weight substantially equal to 0.7%,
- copper, with a percentage by weight ranging substantially from 0.2% to 0.5%,
- manganese, with a percentage by weight ranging substantially from 0.2% to 1.0%,
- magnesium, with a percentage by weight ranging substantially from 0.6% to 1.2%,
- chromium, with a percentage by weight substantially equal to 0.3%,
- zinc, with a percentage by weight substantially equal to 0.3%,
- titanium, with a percentage by weight substantially equal to 0.2%,
- lead, with a percentage by weight substantially equal to 0.4%,
- bismuth, with a percentage by weight ranging substantially from 0.5% to 1.5%,
- aluminum for the remainder.

The components obtained with the AL2 alloy by means of the hot pressing process 100 have the following mechanical characteristics:
- relative density 2.7 kg/dm³,
- unit ultimate tensile strength 422 N/mm²,
- unit yield strength 410 N/mm²,
- Brinell hardness 110 HB.

More precisely, the use of the AL2 alloy allows to obtain components that have a surface hardness of 60 HB after the pressing step 102 and of 110 HB or 95 HB after the thermal treatment 105 for aging, respectively with or without the solubilization step 103.

The metal unions that can be obtained from the hot pressing process of the AL2 alloy can be of several kinds.

For example, two possible variations of these unions are the metal union 1a and the metal union 1b.

Both variations 1a and 1b comprise a main hollow body 2, which has a substantially axially symmetrical geometry and forms a cross-section 3 that is contracted radially for the abutment of a pipe 4 that can be inserted hermetically in the main body 2 and can be fixed thereto by way of retention means.

More precisely, the retention means comprise a locking ring 5, which is open and surrounds the pipe 4.

This locking ring 5 can be engaged by abutment against a compression washer 6, which is accommodated in a circular receptacle formed internally by the pipe 4 and externally by a nut 11 a or 11 b.

Both the locking ring 5 and the compression washer 6 can be made of a white or yellow zinc coated brass alloy. For example, the P-CuZn40Pb2 UNI5705-65 alloy can be used.

The tightness of the coupling between the metal union 1a or 1b and the pipe 4 is ensured by an annular gasket 7, which is elastically deformable and is interposed between the compression washer 6 and a base 8 of the receptacle.

Depending on the temperature range at which the entire metal union 1a or 1b must work, the annular gasket 7 can be made of different materials.

For example, for temperatures ranging from -30°C to +150°C it is possible to use, as a material of the annular gasket 7, a supernitrile mix; for temperatures ranging from -45°C to +150°C it is possible to use, as a material of the annular gasket 7, an FPM mix (known commercially as Viton^{®}); and finally, for temperatures ranging from -45°C to +110°C it is possible to use a nitrile mix as a material of the annular gasket 7.

The two variations 1a and 1b of the metal unions that can be obtained by means of the hot pressing process 100 of the AL2 alloy differ substantially in the means for retention with the pipe 4.

More precisely, the locking ring 5 of both variations 1a and 1b defines a substantially spherical outer surface 9, which can engage a substantially conical inner surface 10 of the locking nut 11 a or 11b, depending on the variation being referenced, which can be screwed externally onto the main body 2.

In order to ensure a safe grip during fastening of the ring 5 on the pipe 4, in both variations 1a and 1b there is a radially wider cross-section 12 of the main hollow body that has a hexagonal profile for engagement with tools.

Moreover, other variations of the metal unions of the angular type can be provided. For example, the metal union can be substantially L-shaped or otherwise curvilinear, allowing the correct fastening of the ring 5 on the pipe 4 without the aid of the radially expanded cross-section 12, since the blended or inclined portion of the union can be locked easily, allowing the screwing of the nut 11a or 11b.

As regards the second variation 1b of the metal union, the retention means of the variation 1b differ from those of the variation 1a due to the presence of a locking band 13, which is jointly coupled to the locking nut 11b and forms at least two side walls 14 that can partially wrap around the pipe 4 and can be mutually closed thereon by way of screw means 15.

In practice it has been found that the hot pressing process, particularly for providing metal unions for pneumatic, hydraulic and fluid-operated circuits, according to the present invention, fully achieves the intended aim and objects, since it allows to provide aluminum unions particularly for pneumatic, hydraulic and fluid-operated use that are subjected to high pressure.

Another advantage of the hot pressing process according to the present invention consists in that the aluminum unions that can be obtained have mechanical strength properties that can be compared to unions made of brass.

A further advantage of the hot pressing process according to the present invention consists in that the aluminum unions that can be obtained have a better corrosion resistance than white zinc-coated brass.

Another advantage of the hot pressing process according to the present invention consists in that the aluminum unions that can be obtained are distinctly lighter than unions made of steel and those made of brass.

The hot pressing process, particularly for providing metal unions for pneumatic, hydraulic and fluid-operated circuits, and the metal unions and the composition of the aluminum alloy known as AL2, thus conceived, are susceptible of numerous modifications and variations, all of which are within the scope of the inventive concept.

Moreover, all the details may be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hot pressing process for providing metal unions (1a, 1b) for pneumatic, hydraulic and fluid-operated circuits, comprising:
- a step (101) of preheating aluminum alloy bars,
- a step (102) of pressing the part comprising the hot pressing of said bars to obtain metal unions (1a, 1b) for pneumatic, hydraulic and fluid-operated circuits, said metal unions (1a, 1b) comprising a main hollow body (2) and a locking nut (11a, 11b) for being screwed externally onto said main hollow body (2) for retention of a pipe (4) , said hot pressing being performed after said step (101) of preheating aluminum alloy bars and including pressing the part starting from the previously heated bars,
- a thermal hardening treatment (104), and
- a thermal treatment (105) for artificial aging.

2. The hot pressing process according to the preceding claim, **characterized in that** said aluminum alloy comprises:
- silicon, with a percentage by weight ranging from 0.6% to 1.4%,
- iron, with a percentage by weight equal to 0.7%,
- copper, with a percentage by weight ranging from 0.2% to 0.5%,
- manganese, with a percentage by weight ranging from 0.2% to 1.0%,
- magnesium, with a percentage by weight ranging from 0.6% to 1.2%,
- chromium, with a percentage by weight equal to 0.3%,
- zinc, with a percentage by weight equal to 0.3%,
- titanium, with a percentage by weight equal to 0.2%,
- lead, with a percentage by weight equal to 0.4%,
- bismuth, with a percentage by weight ranging from 0.5% to 1.5%,
- aluminum for the remainder.

3. The hot pressing process according to one or more of the preceding claims, **characterized in that** said step (101) of preheating aluminum alloy bars comprises a first preheating of said bars in a first furnace to a temperature ranging from 430°C to 470°C which is uniform over the entire cross-section of said bars.

4. The hot pressing process according to one or more of the preceding claims, **characterized in that** it comprises a step (103) of solubilization of the pressed part, which comprises a second preheating of said metal unions in a second furnace at a solubilization temperature that ranges from 515°C to 525°C for a minimum time of substantially 2 hours, said second preheating being performed after said part pressing step (102).

5. The hot pressing process according to one or more of the preceding claims, **characterized in that** said thermal hardening treatment (104) comprises an immersion of said metal unions in a water bath preferably at ambient temperature, said immersion of said metal unions in said bath being performed within 30 seconds of said step (103) of solubilization of the pressed part with said bath at a maximum temperature that is lower than 40°C.

6. The hot pressing process according to one or more of the preceding claims 1, 2, **characterized in that** said step (101) of preheating aluminum alloy bars comprises a first preheating of said bars in a first furnace at a temperature ranging from 480°C to 500°C for a minimum time equal to 2 hours.

7. The hot pressing process according to claim 6, **characterized in that** said thermal hardening treatment (104) comprises an immersion of said metal unions in a water bath preferably at ambient temperature, said immersion of said metal unions in said bath being performed directly after said step (102) of pressing the part.

8. The hot pressing process according to the preceding claims 5 or 7, **characterized in that** said thermal treatment (105) for artificial aging comprises keeping said metal unions in a third furnace at a uniform temperature ranging from 135°C to 145°C for 8 hours, said retention of said metal unions in said third furnace being performed after said thermal hardening treatment (104) after a waiting interval ranging from 2 hours to 3 hours.

9. The hot pressing process according to the preceding claim 8, **characterized in that** it comprises a treatment (107) of anode oxidation of said metal unions.

10. The hot pressing process according to claim 9, **characterized in that** said anode oxidation treatment (107) comprises the oxidation of a thin surface layer of said metal unions for protection against corrosion.

11. A metal union (1a, 1b) for pneumatic, hydraulic and fluid-operated circuits, comprising a main hollow body (2) and a locking nut (11a, 11b) for being screwed externally onto said main hollow body (2) for retention of a pipe (4), said metal union (1a,1b) being made of an aluminum alloy that comprises:
- silicon, with a percentage by weight ranging from 0.6% to 1.4%,
- iron, with a percentage by weight equal to 0.7%,
- copper, with a percentage by weight ranging from 0.2% to 0.5%,
- manganese, with a percentage by weight ranging from 0.2% to 1.0%,
- magnesium, with a percentage by weight ranging from 0.6% to 1.2%,
- chromium, with a percentage by weight equal to 0.3%,
- zinc, with a percentage by weight equal to 0.3%,
- titanium, with a percentage by weight equal to 0.2%,
- lead, with a percentage by weight equal to 0.4%,
- bismuth, with a percentage by weight ranging from 0.5% to 1.5%,
- aluminum for the remainder.

## Patentansprüche

1. Heißpressverfahren für die Bereitstellung von metallischen Kupplungsstücken (1a, 1b) für pneumatische, hydraulische und fluid-betriebene Kreisläufe, aufweisend:
- einen Schritt (101) des Vorerwärmens von Profilen aus einer Aluminiumlegerung, - einen Schritt (102) des Pressens des Teils, aufweisend das Heißpressen besagter Profile, um metallische Kupplungsstücke (1a, 1b) für pneumatische, hydraulische und fluid-betriebene Kreisläufe zu erhalten, besagte metallische Kupplungsstücke (1a, 1b) einen hohlen Hauptkörper (2) und eine Sicherungsmutter (11a, 11b) aufweisen, um von außen auf besagten hohlen Hauptkörper (2) geschraubt zu werden, um ein Rohr (4) zu halten, wobei besagtes Heißpressen nach besagtem Schritt (101) des Vorerwärmens von Profilen aus Aluminiumlegierung durchgeführt wird, und das Pressen des Teils umfasst, ausgehend von den zuvor erhitzten Profilen, - eine thermische Härtungsbehandlung (104), und
- eine thermische Behandlung (105) zur künstlichen Alterung.

2. Heißpressverfahren nach dem vorhergehenden Anspruch, **dadurch gekennzeichnet, dass** die Aluminium-Legierung aufweist:
- silizium, mit einem prozentualen Gewichtsanteil im Bereich von 0,6% bis 1,4%,
- Eisen, mit einem prozentualen Gewichtsanteil von 0,7%,
- Kupfez, mit einem prozentualen Gewichtsanteil im Bereich von 0,2% bis 0,5%,
- Mangan, mit einem prozentualen Gewichtsanteil im Bereich von 0,2% bis 1,0%,
- Magnesium, mit einem prozentualen Gewichtsanteil im Bereich von 0,6% bis 1,2%,
- Chrom, mit einem prozentualen Gewichtsanteil von 0,3%,
- Zink, mit einem prozentualen Gewichtsanteil von 0,3%,
- Titan, mit einem prozentualen Gewichtsanteil von 0,2%,
- Blei, mit einem prozentualen Gewichtsanteil gleich 0,4%,
- Wismut, mit einem prozentualen Gewichtsanteil von 0,5% bis 1,5%,
- Aluminium den Rest bildend.

3. Heißpressverfahren nach einem oder mehreren der vorhergehenden Ansprüche, **dadurch gekennzeichnet, dass** besagter Schritt (101) des Vorerwärmens von Profilen aus Aluminiumlegierung ein erstes Vorerwärmen der Profile in einem ersten Ofen auf eine Temperatur im Bereich von 430°C bis 470°C aufweist, welche über den gesamten Querschnitt dieser Profile gleichmäßig ist.

4. Heißpressverfahren nach einem oder mehreren der vorhergehenden Ansprüche, **dadurch gekennzeichnet, dass** es einen Schritt (103) der Solubilisierung des gepressten Teils, der ein zweites Vorerwärmen besagter metallischer Kupplungsstücke in einem zweiten Ofen bei einer Solubilisierungstemperatur in einem Bereich von 515°C bis 525°C für eine Mindestzeit von im wesentlichen 2 Stunden aufweist, das zweite Vorerwärmen nach besagtem Schritt (102) des Pressens der Teile durchgeführt wird.

5. Heißpressverfahren nach einem oder mehreren der vorhergehenden Ansprüche, **dadurch gekennzeichnet, dass** besagte thermische Härtungsbehandlung (104) ein Eintauchen besagter metallischer Kupplungsstücke in ein Wasserbad, vorzugsweise bei Raumtemperatur, aufweist, besagtes Eintauchen besagter metallischer Kupplungsstücke in besagtem Bad innerhalb von 30 Sekunden besagten Schritts (103) der Solubilisierung des gepressten Teils in besagtem Bad bei einer maximalen Temperatur, die niedriger als 40°C ist, durchgeführt wird.

6. Heißpressverfahren nach einem oder mehreren der Ansprüche 1, 2, **dadurch gekennzeichnet, dass** besagter Schritt (101) des Vorerwärmens der Profile aus einer Aluminiumlegierung ein erstes Vorerwärmen besagter Profile in einem ersten Ofen bei einer Temperatur von 480°C bis 500°C für eine Mindestzeit von 2 Stunden aufweist.

7. Heißpressverfahren nach Anspruch 6, **dadurch gekennzeichnet, dass** besagte thermische Härtungsbehandlung (104) aus einem Eintauchen der metallischen Kupplungsstücke in einem Wasserbad, vorzugsweise bei Raumtemperatur, aufweist, besagtes Eintauchen besagter metallischer Kupplungsstücke in besagtem Bad direkt nach dem Schritt (102) des Pressens des Teils erfolgt.

8. Heißpressverfahren gemäß der vorhergehenden Ansprüche 5 oder 7, **dadurch dadurch gekennzeichnet, dass** besagte thermische Behandlung (105) der künstlichen Alterung aufweisen, das Halten besagter metallischer Kupplungsstücke in einem dritten Ofen bei einer gleichmäßigen Temperatur von 135°C bis 145°C für 8 Stunden, besagtes Halten besagter metallischer Kupplungsstücke in besagtem dritten Ofen nach besagter thermischer Härtungsbehandlung (104) nach einem Wartezeitintervall in einem Bereich von 2 Stunden bis 3 Stunden durchgeführt wird.

9. Heißpressverfahren nach dem vorhergehenden Anspruch 8, **dadurch gekennzeichnet, dass** sie es eine anodische Oxidationsbehandlung (107) besagter metallischer Kupplungsstücke aufweist.

10. Heißpressverfahren nach Anspruch 9, **dadurch gekennzeichnet, dass** besagte anodische Oxidationsbehandlung (107) die Oxidation einer dünnen Oberflächenschicht der metallischen Kupplungsstücke zum Schutz vor Korrosion aufweist.

11. Metallisches Kupplungsstück (1a, 1b) für pneumatische, hydraulische und fluid-betriebene Kreisläufe, aufweisend einen hohlen Hauptkörper (2) und eine Sicherungsmutter (11a, 1 1b), um von außen auf besagten hohlen Hauptkörper (2) geschraubt zu werden, um ein Rohr (4) zu halten, wobei besagte metallische Kupplungsstücke, (1a, 1b) aus einer Aluminiumlegierung bestehten, die aufweist:
- Silizium, mit einem prozentualen Gewichtsanteil im Bereich von 0,6% bis 1,4%,
- Eisen, mit einem prozentualen Gewichtsanteil von 0,7%,
- Kupfer, mit einem prozentualen Gewichtsanteil im Bereich von 0,2% bis 0,5%,
- Mangan, mit einem prozentualen Gewichtsanteil im Bereich von 0,2% bis 1,0%,
- Magnesium, mit einem prozentualen Gewichtsanteil im Bereich von 0,6% bis 1,2%,
- Chrom, mit einem prozentualen Gewichtsanteil von 0,3%,
- Zink, mit einem prozentualen Gewichtsanteil von 0,3 %,
- Titan, mit einem prozentualen Gewichtsanteil von 0,2%,
- Blei, mit einem prozentualen Gewichtsanteil gleich 0,4%,
- Wismut, mit einem prozentualen Gewichtsanteil von 0,5% bis 1,5%,
- Aluminium als Restanteil.

## Revendications

1. Procédé de pressage à chaud permettant de fournir des raccords métalliques (1a, 1b) pour des circuits pneumatiques, hydrauliques et fluidique, comprenant :
- une étape (101), qui consiste à préchauffer des barres en alliage d'aluminium,
- une étape (102), qui consiste à presser la pièce et qui comprend le pressage à chaud desdites barres pour obtenir des raccords métalliques (1a, 1b) pour circuits pneumatiques, hydrauliques et fluidiques, lesdits raccords métalliques (1a, 1b) comprenant un corps creux principal (2) et un écrou de verrouillage (11a, 11b) destiné à être vissé extérieurement sur ledit corps creux principal (2) pour maintenir un tube (4), ledit pressage à chaud étant exécuté après ladite étape (101) de préchauffage des barres en alliage d'aluminium et comprenant le pressage de la pièce à partir des barres préalablement chauffées,
- un traitement thermique de durcissement (104), et
- un traitement thermique de vieillissement artificiel (105).

2. Procédé de pressage à chaud suivant la revendication précédente, **caractérisé en ce que** ledit alliage d'aluminium comprend :
- du silicium, avec un pourcentage par poids allant de 0,6% à 1,4%,
- du fer, avec un pourcentage par poids égal à 0,7%,
- du cuivre, avec un pourcentage par poids allant de 0,2% à 0,5%,
- du manganèse, avec un pourcentage par poids allant de 0,2% à 1,0%,
- du magnésium, avec un pourcentage par poids allant de 0,6% à 1,2%,
- du chrome, avec un pourcentage par poids égal à 0,3%,
- du zinc, avec un pourcentage par poids égal à 0,3%,
- du titane, avec un pourcentage par poids égal à 0,2%,
- du plomb, avec un pourcentage par poids égal à 0,4%,
- du bismuth, avec un pourcentage par poids allant de 0,5% à 1,5%,
- de l'aluminium pour le reste.

3. Procédé de pressage à chaud suivant une ou plusieurs des revendications précédentes, **caractérisé en ce que** ladite étape (101) de préchauffage de barres en alliage d'aluminium comprend un premier préchauffage desdites barres dans un premier four à une température allant de 430°C à 470°C qui est uniforme sur toute la section desdites barres.

4. Procédé de pressage à chaud suivant une ou plusieurs des revendications précédentes, **caractérisé en ce qu'**il comprend une étape (103) de solubilisation de la pièce pressée qui comprend un second préchauffage desdits raccords métalliques dans un second four à une température de solubilisation allant de 515°C à 525°C pendant une durée minimale de 2 heures essentiellement, ledit second préchauffage ayant lieu après ladite étape de pressage de la pièce (102).

5. Procédé de pressage à chaud suivant une ou plusieurs des revendications précédentes, **caractérisé en ce que** ledit traitement de durcissement thermique (104) comprend une immersion desdits raccords métalliques dans un bain d'eau, de préférence à température ambiante, ladite immersion desdits raccords métalliques dans ledit bain rayant lieu pendant 30 secondes au cours de ladite étape (103) de solubilisation de la pièce pressée, ledit bain étant à une température maximal inférieure à 40°C.

6. Procédé de pressage à chaud suivant une ou plusieurs des revendications précédentes 1,2, **caractérisé en ce que** ladite étape (101) de préchauffage de barres en alliage d'aluminium comprend un premier préchauffage desdites barres dans un premier four à une température allant de 480° à 500°C pendant une durée minimale égale à 2 heures.

7. Procédé de pressage à chaud suivant la revendication 6, **caractérisé en ce que** ledit traitement de durcissement thermique (104) comprend une immersion desdits raccords métalliques dans un bain d'eau, de préférence à température ambiante, ladite immersion desdits raccords métalliques dans ledit bain ayant lieu directement après ladite étape (102) de pressage de la pièce.

8. Procédé de pressage à chaud suivant les revendications précédentes 5 ou 7, **caractérisé en ce que** ledit traitement thermique de vieillissement artificiel (105) comprend le maintien desdits raccords métalliques dans un troisième four à une température uniforme allant de 135° à 145°C pendant 8 heures, le maintien desdits raccords métalliques dans ledit troisième tour ayant lieu après ledit traitement thermique de durcissement (104), après un intervalle d'attente allant de 2 heures à 3 heures.

9. Procédé de pressage à chaud suivant la revendication précédente 8, **caractérisé en ce qu'**il comprend un traitement (107) d'oxydation anodique desdits raccords métalliques.

10. Procédé de tressage à chaud suivant la revendication 9, **caractérisé en ce que** ledit traitement d'oxydation anodique (107) comprend l'oxydation d'une mince couche superficielle desdits raccords métalliques pour la protection anti-corrosion,

11. Raccord métallique (1a, 1b) pour circuits pneumatiques, hydrauliques et fluidiques, comprenant un corps creux principal (2) et un écrou de verrouillage (11a, 11b) destiné à être vissé extérieurement sur ledit corps creux principal (2) pour maintenir un tube (4), ledit raccord métallique (1a, 1b) étant réalisé dans un alliage d'aluminium qui comprend :
- du silicium, avec un pourcentage par poids allant de 0,6% à 1,4%,
- du fer, avec un pourcentage par poids égal à 0,7%,
- du cuivre, avec un pourcentage par poids allant de 0,2 à 0,5%,
- du manganèse, avec un pourcentage par poids allant de 0,2% à 1,0%,
- du magnésium, avec un pourcentage par poids allant de 0,6% à 1,2%, du chrome, avec un pourcentage par poids égal à 0,3%,
- du zinc, avec un pourcentage par poids égal à 0,3%,
- du titane, avec un pourcentage par poids égal à 0,2%,
- du plomb, avec un pourcentage par poids égal à 0,4%,
- du bismuth, avec un pourcentage par poids allant de 0,5% à 1,5%,
- de l'aluminium pour le reste.
